# EUROPÄISCHE PATENTSCHRIFT

(11) **EP 2 313 626 B1**
(45) Veröffentlichungstag und Bekanntmachung des Hinweises auf die Patenterteilung: **21.03.2012**
(21) Anmeldenummer: 10736618.9
(22) Anmeldetag: 15.07.2010
(51) Int. Cl.: F02B 39/04, F02B 39/08, F16H 47/06, F16H 57/04

(54) **TURBO-COMPOUND-SYSTEM FÜR EINE ANTRIEBSVORRICHTUNG**
TURBO COMPOUND SYSTEM FOR A DRIVE APPARATUS
SYSTÈME TURBORÉCUPÉRATEUR DESTINÉ À UN DISPOSITIF D ENTRAÎNEMENT

(30) Priorität: 22.07.2009 DE 102009034193
(43) Veröffentlichungstag der Anmeldung: 27.04.2011
(73) Patentinhaber: Voith Patent GmbH, 89522 Heidenheim (DE)
(72) Erfinder: KLEY, Markus, 73479 Ellwangen (DE); FIGLER, Thomas, 44803 Bochum (DE); WUNSCH, Alexander, 89522 Heidenheim (DE)
(74) Vertreter: Dr. Weitzel & Partner
(86) Internationale Anmeldenummer: PCT/EP2010/004307
(87) Internationale Veröffentlichungsnummer: WO 2011/009558

(56) Entgegenhaltungen:
- WO-A1-91/10076
- DE-A1-102005 025 272
- DE-A1-102006 011 987
- DE-U1- 9 202 578

## Beschreibung

Die Erfindung betrifft ein Turbo-Compound-System mit einer eine Verbrennungskraftmaschine aufweisende Antriebsvorrichtung, nach der im Oberbegriff von Anspruch 1 näher definierten Art.

Turbo-Compound-Systeme sind aus dem allgemeinen Stand der Technik bekannt. Übliche Turbo-Compound-Systeme weisen eine Turbine auf, welche von einem Abgasstrom einer Verbrennungskraftmaschine angetrieben wird. Die an einer von der Turbine angetriebenen Welle anliegende Leistung wird typischerweise über eine Getriebeeinheit mit einer hydrodynamischen Kupplung auf eine Abtriebswelle des Turbo-Compound-Systems übertragen. Die Getriebeeinheit hat dabei die Aufgabe, die sehr hohe Drehzahl der von der Turbine angetriebenen Welle in eine deutlich niedrigere Drehzahl an der Abtriebswelle des Turbo-Compound-Systems zu untersetzen. Über die Strömungskupplung kann dann eine gezielte Übertragung der Leistung durch das Turbo-Compound-System erfolgen. Durch die hydrodynamische Kupplung wird neben der steuerbaren Übertragung der Leistung außerdem eine Abkopplung der von der Turbine angetriebenen Welle von Torsionsvibrationen erreicht, welche im Bereich einer Abtriebswelle der Verbrennungskraftmaschine vorliegen, und welche bei einer Wirkung des Turbo-Compound-Systems auf die Kurbelwelle der Verbrennungskraftmaschine auf die Abtriebswelle des Turbo-Compound-Systems übertragen werden können.

Die von der Turbine angetriebene Welle liefert dabei Leistung, welche dem Abgasstrom der Verbrennungskraftmaschine entnommen wird. Diese Leistung gelangt dann über die Getriebeeinheit zu der Abtriebswelle des Turbo-Compound-Systems. Von der Abtriebswelle gelangt die Leistung dann in den Bereich einer anzutreibenden Baueinheit oder in den Bereich der Abtriebswelle der Antriebsvorrichtung beziehungsweise die Kurbelwelle der Verbrennungskraftmaschine, um die durch die Verbrennungskraftmaschine benötigte Antriebsleistung zu verringern. Derartige Turbo-Compound-Systeme können als alleiniges Mittel zur Rückgewinnung von Energie aus dem Abgas einer Verbrennungskraftmaschine ausgebildet sein, oder sie können zusätzlich zu weiteren Mitteln, wie beispielsweise einem Turbolader, in dem Abgasstrang der Verbrennungskraftmaschine angeordnet werden. Typische Einsatzmöglichkeiten für derartige Turbo-Compound-Systeme liegen heute insbesondere bei Nutzfahrzeugen, Bussen oder spurgebundenen Fahrzeugen.

Beispielhaft soll bezüglich eines derartigen Turbo-Compound-Systems auf die DE 601 07 599 T2 verwiesen werden. Um nun die Bauelemente in der Getriebeeinheit, und hier insbesondere die Lagerung der von der Turbine angetriebenen Welle entsprechend zu schmieren, kann ein Schmieröl in den Bereich der Getriebeeinheit eingebracht werden. Typischerweise wird dazu die Schmierölversorgung der Verbrennungskraftmaschine genutzt, welche neben der Versorgung der Verbrennungskraftmaschine auch die Versorgung des Turbo-Compound-Systems mit Schmieröl übernimmt. Die DE 601 07 599 T2 beschreibt in diesem Zusammenhang, dass es Probleme hinsichtlich eines Schmierölsprühnebels in der Getriebeeinheit gibt, da dieser insbesondere die hydrodynamische Kupplung negativ beeinflusst. Sie schlägt daher eine Trennwand zwischen den einzelnen Bereichen der Getriebeeinheit vor, welche den Aufbau jedoch komplex und aufwendig macht, sowie einen vergleichsweise großen Bauraum benötigt.

Daneben hat sich außerdem gezeigt, dass sich in dem Gehäuse der Getriebeeinheit des Turbo-Compound-Systems ein Ölsumpf ansammeln kann, welcher zu Panschverlusten der Bauelemente der Getriebeeinheit sowie der hydrodynamischen Kupplung führen kann. Da die Schmierölversorgung im Allgemeinen durch die Schmierölversorgung der Verbrennungskraftmaschine erfolgt, fehlen außerdem Daten über den Ölstand in dem Gehäuse der Getriebeeinheit des Turbo-Compound-Systems, sodass die Panschverluste von Zeit zu Zeit unkontrolliert auftreten, immer dann, wenn sich eine entsprechend große Menge an Schmieröl in dem Gehäuse der Getriebeeinheit des Turbo-Compound-Systems gesammelt hat. Ein prinzipiell denkbarer Aufbau mit einem vergleichsweise großen Raum unterhalb der hydrodynamischen Kupplung und/oder der anderen drehenden Elemente in der Getriebeeinheit, um den Ölsumpf ohne negative Beeinflussung der Elemente aufzunehmen, in dem Gehäuse der Getriebeeinheit des Turbo-Compound-Systems würde sehr viel Bauraum benötigen und das Turbo-Compound-System selbst außerordentlich groß und sperrig machen, was ein gravierender Nachteil im Bezug auf das üblicherweise vorgegebene, eher geringe Bauvolumen für ein derartiges Turbo-Compound-System darstellt.

Es ist daher die Aufgabe der vorliegenden Erfindung, die oben genannten Nachteile zu vermeiden und ein kompaktes und hocheffizientes Turbo-Compound-System zu schaffen.

Erfindungsgemäß wird diese Aufgabe durch die im kennzeichnenden Teil von Anspruch 1 genannten Merkmale gelöst.

Dadurch, dass die Antriebsvorrichtung wenigstens ein Fördermittel aufweist, durch welches Schmieröl oder ein schmierölhaltiges Gemisch aus dem Gehäuse absaugbar ist, wird sichergestellt, dass sich in dem Gehäuse der Getriebeeinheit des Turbo-Compound-Systems keine unnötig großen Mengen an Schmieröl und/oder einem schmierölhaltigen Gemisch, beispielsweise einem Schmierölnebel befinden. Somit wird sichergestellt, dass in dem in Richtung der Schwerkraft beim bestimmungsgemäßen Gebrauch unteren Teil des Gehäuses der Getriebeeinheit sich keine so große Menge an Schmieröl sammeln kann, dass Bauteile der Getriebeeinheit, und hier insbesondere die hydrodynamische Kupplung, in diesem Öl panscht und somit entsprechende Panschverluste verursacht. Durch diesen Aufbau gemäß der Erfindung lassen sich also mit minimalem Bedarf an Bauraum bestmögliche Betriebsbedingungen für die Getriebeeinheit des Turbo-Compound-Systems schaffen, sodass eine entsprechende Wirkungsgradsteigerung bei der Nutzung der Energie aus dem Abgas der Verbrennungskraftmaschine realisiert werden kann.

Gemäß einer sehr vorteilhaften und günstigen Ausgestaltung der Erfindung ist es dabei vorgesehen, dass das wenigstens eine Fördermittel direkt oder über ein Leitungselement mit dem Gehäuse der Getriebeeinheit verbunden ist.

Je nach vorhandenem Bauraum lässt sich so die Anordnung des Turbo-Compound-Systems in der Antriebsvorrichtung zusammen mit dem Fördermittel entsprechend variieren, da sowohl ein direkter Anschluss beziehungsweise Einbau des Fördermittels in das Gehäuse der Getriebeeinheit vorgenommen werden kann, als auch eine Anbindung über ein Leitungselement, sodass das Fördermittel örtlich von dem Aufbau des Gehäuses der Getriebeeinheit entfernt angeordnet werden kann.

Gemäß einer sehr günstigen und vorteilhaften Ausgestaltung hiervon ist es außerdem vorgesehen, dass die Verbindung beim bestimmungsgemäßen Gebrauch in Richtung der Schwerkraft oberhalb eines typischerweise den Ölsumpf der Getriebeeinheit aufweisenden Bereichs des Gehäuses mündet.

Über einen solchen optionalen, alternativen oder ergänzenden Aufbau wird erreicht, dass die Menge an in dem Gehäuse der Getriebeeinheit befindlichen Luft-Öl-Gemisch beziehungsweise Schmierölnebel entsprechend verringert wird. Zusammen mit einer leichten Evakuierung des Gehäuses durch das Absaugen des Schmierölnebels wurde außerdem eine Wirkungsgradsteigerung bei der Leistungsübertragung in der Getriebeeinheit beobachtet. Um ein solches Absaugen eines schmierölhaltigen Gemischs beziehungsweise Schmierölnebels in der Praxis realisieren zu können, ist das Fördermittel vorteilhaft entsprechend ausgestaltet, so dass dieses neben Flüssigkeit auch Gas beziehungsweise ein Gas-Flüssigkeits-Gemisch fördern kann.

Gemäß einer alternativen oder gegebenenfalls auch ergänzenden Ausgestaltung hiervon ist es vorgesehen, dass die Verbindung bei bestimmungsgemäßem Gebrauch in Richtung der Schwerkraft unten in das Gehäuse mündet. Unten bedeutet dabei in einem unteren Bereich, beispielsweise dem unteren Drittel des Gehäuses, insbesondere im Bereich einer beziehungsweise unmittelbar in der Bodenwand, vorteilhaft von unten mündend, so dass die Öffnung nach oben gerichtet ist.

Dieser Aufbau erlaubt dann das Absaugen des flüssigen Schmieröls und, sofern das Fördermittel dies erlaubt, auch das Absaugen des angesprochenen Schmierölnebels samt eines Teils der im Gehäuse der Getriebeeinheit befindlichen Luft, sodass die oben beschriebenen Wirkungsgradgewinne hinsichtlich der Verringerung des flüssigen Schmieröls und einer Minimierung der Panschverluste ebenso erreicht werden können, wie eine Optimierung des Wirkungsgrads durch das Absaugen des Schmierölnebels und das Anlegen eines Unterdrucks an das Gehäuse der Getriebeeinheit.

Gemäß einer besonders günstigen und vorteilhaften Weiterbildung der Erfindung kann es vorgesehen sein, dass die Verbrennungskraftmaschine ein Kurbelgehäuse aufweist, wobei im Bereich des Kurbelgehäuses wenigstens ein Fördermittel angeordnet ist, über welches Schmieröl aus dem Bereich des Kurbelgehäuses absaugbar ist.

Das Kurbelgehäuse der Verbrennungskraftmaschine wird im Allgemeinen ohnehin ein Fördermittel für das sich im Schmierölsumpf des Kurbelgehäuses sammelnde Schmieröl aufweisen. Dieses Fördermittel wird benötigt, um einen Schmierölstrom zum Schmieren der Verbrennungskraftmaschine, insbesondere deren Lager und/oder Kolben sicherzustellen. Das Fördermittel bewirkt somit einen Schmierölkreislauf aus dem Schmierölsumpf in die zu schmierenden Bereiche und zurück in den Sumpf.

Neben dem Schmierölkreislauf der Verbrennungskraftmaschine können ein oder mehrere weitere Schmierölkreisläufe vorgesehen sein, beispielsweise um Komponenten eines Wechselgetriebes zu schmieren. Dieses Wechselgetriebe ist typischerweise zwischen der Verbrennungskraftmaschine und dem angetriebenen Gegenstand, beispielsweise wenigstens einem angetriebenen Rad eines Fahrzeugs angeordnet und kann beispielsweise als manuell geschaltetes Getriebe, automatisiertes Schaltgetriebe oder Automatgetriebe ausgeführt sein. Auch zur Ausbildung eines Schmierölkreislaufes in diesem (Haupt-)Getriebe ist in der Regel ein Fördermittel vorgesehen, um Schmieröl aus dem Schmierölsumpf zu fördern. Der Hauptgetriebeschmierölkreislauf und der Schmierölkreislauf der Verbrennungskraftmaschine können getrennt oder, insbesondere mit einem einzigen Fördermittel, integriert ausgeführt sein. Weitere entsprechende Schmierölkreisläufe sind möglich.

Gemäß einer Ausführungsform der Erfindung gelangt nun das Schmieröl aus dem Schmierölkreislauf der Verbrennungskraftmaschine und/oder des Hauptgetriebes in die Getriebeeinheit des Turbo-Compound-Systems. Dort schmiert es die in der Getriebeeinheit befindlichen Bauteile, ehe es zurück in den Schmierölsumpf des Kurbelgehäuses und/oder des Hauptgetriebegehäuses kommt.

In einer besonders günstigen Ausgestaltung hiervon ist es nun vorgesehen, dass das Fördermittel im Bereich des Kurbelgehäuses und/oder Hauptgetriebegehäuses als das einzige Fördermittel ausgebildet ist, wobei das Gehäuse der Getriebeeinheit über ein Leitungselement mit dem Fördermittel im Bereich des Kurbelgehäuses und/oder Hauptgetriebegehäuses verbunden ist.

Damit kann die in der Antriebsvorrichtung typischerweise ohnehin vorhandene Schmierölpumpe genutzt werden, um zusätzlich das Schmieröl aus dem Bereich der Getriebeeinheit des Turbo-Compound-Systems abzusaugen. Der Aufbau wird damit sehr einfach und kompakt und kann auf zusätzliche Bauteile verzichten.

Gemäß einer sehr günstigen und vorteilhaften Weiterbildung hiervon ist es ferner vorgesehen, dass das Leitungselement eine über einen Sensor gesteuerte Ventileinrichtung aufweist, welche einen durchströmbaren Querschnitt des Leitungselements nur bei Vorhandensein von flüssigem Schmieröl freigibt. Dadurch wird sichergestellt, dass in den Bereich des Fördermittels am Kurbelgehäuse und/oder Hauptgetriebegehäuse lediglich flüssiges Schmieröl anlangt. Damit kann der herkömmliche Aufbau weiterverwendet werden, bei dem als Fördermittel eine einfache Schmierölpumpe eingesetzt wird, welche lediglich zur Förderung von Schmieröl und nicht zur Förderung eines Schmieröl-Luft-Gemischs beziehungsweise Schmierölnebels geeignet ist. Der besonders einfache und kompakte Aufbau, welcher außer dem Leitungselement mit der Ventileinrichtung keine Ergänzung gegenüber dem Stand der Technik benötigt, kann somit zwar nicht beide der oben genannten Vorteile realisieren, er kann zumindest durch das Absaugen des Öls die in der Getriebeeinheit des Turbo-Compound-Systems auftretenden Panschverluste jedoch auf sehr einfache und effiziente Weise kostengünstig verhindern.

Weitere vorteilhafte Ausgestaltungen des erfindungsgemäßen Turbo-Compound-Systems für eine Antriebsvorrichtung ergeben sich aus den restlichen abhängigen Ansprüchen sowie aus dem Ausführungsbeispiel, welches nachfolgend anhand einer Figur näher erläutert wird.

Die einzige beigefügte Figur zeigt eine Antriebsvorrichtung mit einem Turbo-Compound-System, welches verschiedene Ausgestaltungsmöglichkeiten der Erfindung zeigt.

In der einzigen beigefügten Figur ist eine Antriebsvorrichtung 1 mit einer symbolisch angedeuteten Verbrennungskraftmaschine 2 dargestellt. Bei der Verbrennungskraftmaschine 2 kann es sich insbesondere um einen Dieselmotor handeln, wie er für Nutzfahrzeuge oder leichte Schienenfahrzeuge, welche die bevorzugten Fahrzeuge zum Einsatz einer derartigen Antriebsvorrichtung 1 sind, üblich ist. Das Abgas der Verbrennungskraftmaschine 2 gelangt über ein entsprechendes Abgassystem, welches hier durch den Pfeil 3 lediglich symbolisch angedeutet ist, in den Bereich einer Turbine 4, in welcher in dem Abgas der Verbrennungskraftmaschine 3 befindliche Energie zurückgewonnen wird. Hierfür dient ein stark schematisiert angedeutetes Turbo-Compound-System 5. Dieses umfasst neben einer von der Turbine 4 angetriebenen Welle 6 eine Abtriebswelle 7 sowie eine Getriebeeinheit 8, welche in einem Gehäuse 9 angeordnet ist und neben geeigneten Getriebemitteln zur Untersetzung der Drehzahl der von der Turbine 4 angetriebenen Welle 6, welche hier beispielhaft als Stirnradverzahnung dargestellt sind, eine hydrodynamische Kupplung beziehungsweise Turbokupptung 10. Über die Abtriebswelle 7 des Turbo-Compound-Systems 5 wird die aus dem Abgassystem 3 der Verbrennungskraftmaschine 2 zurückgewonnene Leistung direkt oder, wie hier beispielhaft angedeutet, mittelbar über ein weiteres Stirnradgetriebe, welches selbstverständlich auch innerhalb des Gehäuses 9 der Getriebeeinheit 8 positioniert sein könnte, auf eine Welle 11 der Antriebsvorrichtung 1 beziehungsweise die Kurbelwelle der Verbrennungskraftmaschine 2 übertragen.

Die so zurückgewonnene Leistung gelangt dann zusammen mit der Leistung der Verbrennungskraftmaschine 2 über ein Getriebe 12 in den Bereich des eigentlichen Abtriebs der Antriebsvorrichtung 1. Dieser Abtrieb, welcher hier symbolisch durch einen Flansch 13 angedeutet ist, kann dann beispielsweise das oder die angetriebenen Räder eines Fahrzeugs, welches mit der Antriebsvorrichtung 1 ausgerüstet ist, antreiben. Das Getriebe 12 kann typischerweise als Gangwechselgetriebe, also entweder als manuelles Schaltgetriebe oder als Automatikgetriebe mit oder ohne hydrodynamischen Wandler ausgebildet sein. Außerdem kann eine optionale Kupplung 14 in der Welle 11, welche das Getriebe 12 mit der Verbrennungskraftmaschine 2 verbindet, angeordnet sein.

Die Verbrennungskraftmaschine 2 weist in an sich bekannter Weise ein Kurbelgehäuse 15 auf. In dem Kurbelgehäuse 15 sammelt sich in der üblichen Art im unteren Bereich des Kurbelgehäuses 15 Schmieröl in einem hier beispielhaft angedeuteten Schmierölsumpf 16. Das Schmieröl aus diesem Schmierölsumpf 16 wird, wie auch bei herkömmlichen Ausgestaltungen der Antriebsvorrichtung 1, über ein Fördermittel 17, hier eine Schmierölpumpe 17, aus dem Bereich des Schmierölsumpfs 16 abgesaugt und zur Schmierung der Verbrennungskraftmaschine 2 dieser erneut zugeleitet. Daneben wird es außerdem dem Bereich der Getriebeeinheit 8 des Turbo-Compound-Systems 5 zugeleitet, beispielsweise über einen Durchgang im Bereich des Anschlusses des Gehäuses 9 der Getriebeeinheit 8 an das Gehäuse (Kurbelgehäuse 15) der Verbrennungskraftmaschine 2 (nicht gezeigt). Es übernimmt dort ebenso wie im Bereich der Verbrennungskraftmaschine 2 die Schmierung der entsprechenden Getriebe- und Lagerbauteile. Danach gelangt das Schmieröl in dem Kurbelgehäuse 15 der Verbrennungskraftmaschine 2 aufgrund der Wirkung der Schwerkraft direkt wieder in den Bereich des Schmierölssumpfs 16. Das Schmieröl aus dem Bereich der Getriebeeinheit 8 beziehungsweise des Gehäuses 9 sammelt sich ebenfalls im Gehäuse 9 und gelangt von dort ebenso in den Bereich des Schmierölsumpfs 16. Hierfür kann beispielsweise ein erstes Leitungselement 18 zwischen der Getriebeeinheit 8 und dem Kurbelgehäuse 15 vorhanden sein, um sich im Bereich des Gehäuses 9 der Getriebeeinheit 8 sammelndes Schmieröl in Richtung des Schmierölsumpfs 16 abzuleiten. Selbstverständlich kann das Getriebe 12 ebenfalls in den Schmierölkreislauf integriert sein, oder einen eigenen entsprechenden Schmierölkreislauf, insbesondere mit eigenem Fördermittel/eigener Schmierölpumpe aufweisen. Auf eine Darstellung dieser Schmierung des Getriebes 12 wurde zur Vereinfachung der Figur hier jedoch verzichtet.

Die Erfahrung mit derartigen Turbo-Compound-Systemen 5 hat nun gezeigt, dass die sich im Gehäuse 9 der Getriebeeinheit 8 sammelnde Schmierölmenge nicht oder nur indirekt beeinflussbar ist, da diese typischerweise aus dem Bereich der Verbrennungskraftmaschine 2 in den Bereich des Gehäuses 9 gelangt. Sammelt sich nun im unteren Bereich des Gehäuses 9 eine entsprechend große Schmierölmenge, so kommt es zu Panschverlusten in der Getriebeeinheit 8, durch die Turbokupplung 10 und/oder panschende Getriebemittel, wie beispielsweise Zahnräder. Um nun mit einem sehr kompakten Aufbau des Turbo-Compound-Systems 5, also insbesondere einem möglichst kleinen Gehäuse 9 der Getriebeeinheit 8 auszukommen und dennoch Panschverluste weitestgehend zu vermeiden, ist im Bereich des ersten Leistungselements 18 ein Fördermittel 19 angeordnet, um das Schmieröl aus dem Bereich des Gehäuses 9 aktiv abzusaugen. Durch diese aktive Absaugung des Schmieröls wird verhindert, dass sich ein Schmierölsumpf beziehungsweise ein zu großer Schmierölsumpf im Gehäuse 9 bildet, welcher entsprechende Panschverluste verursachen würde.

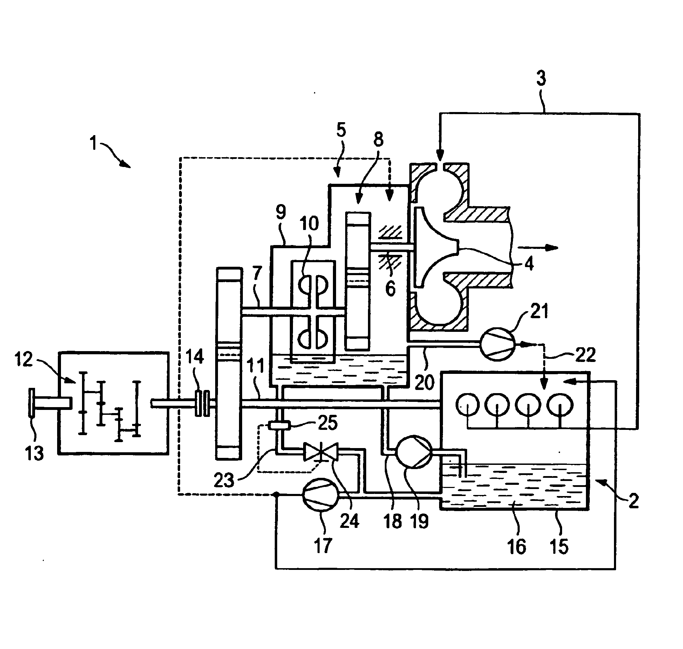

Typischerweise wird aufgrund der sehr schnelllaufenden von der Turbine 4 angetriebenen Welle 6 eine starke Verwirbelung des Schmieröls in dem Gehäuse 9 stattfinden, so dass praktisch überall in dem Gehäuse 9 ein Nebel aus Luft und darin verteilten feinen Schmieröltröpfchen vorliegt. Bei entsprechender Ausgestaltung des Fördermittels 19, so dass dieses nicht nur flüssiges Schmieröl absaugen, sondern auch ein derartiges Luft-Schmieröl-Gemisch aus dem Gehäuse 9 absaugen kann, wird erreicht, dass die Menge an Schmierölnebel und Schmieröl in dem Gehäuse 9 entsprechend minimiert wird. Dadurch wird außerdem ein Unterdruck in dem Gehäuse 9 erzeugt, der vorteilhaft durch eine druckdichte Abdichtung des Gehäuses 9 der Getriebeeinheit 8 gegenüber der Umgebung begünstigt wird. Zusammen mit dem abgesaugten Schmierölnebel verringert dies die Verluste der teilweise sehr schnell umlaufenden Bauteile und der hydrodynamischen Kupplung deutlich. Die Getriebeeinheit 8 kann also mit dem entsprechenden Fördermittel 19 sowohl von überschüssigem Schmieröl befreit werden als auch durch das Anlegen eines Unterdrucks im Wirkungsgrad entsprechend gesteigert werden. Der in Figur 1 dargestellte Aufbau erlaubt somit bei einer sehr kompakten Ausführung des Turbo-Compound-Systems 5 die Minimierung von Leistungsverlusten in dem Turbo-Compound-System 5.

In der Darstellung der einzigen beigefügten Figur ist ferner ein zweites Leitungselement 20 mit einem weiteren Fördermittel 21 zu erkennen. Dieses Leitungselement 20 mündet dabei nicht im unteren Bereich des Gehäuses 9, sondern in einem etwas darüber angeordneten Bereich. Im normalen Betrieb wird über das Leitungselement 20 daher voraussichtlich kein flüssiges Schmieröl angesaugt, sondern lediglich Luft beziehungsweise ein Nebel aus Luft und Schmieröltröpfchen. Über dieses Fördermittel 21 kann also insbesondere die Verbesserung des Wirkungsgrads durch das Anlegen eines Unterdrucks und das Absaugen des Schmierölnebels realisiert werden. Das abgesaugte Gas beziehungsweise der abgesaugte Schmierölnebel kann dabei prinzipiell einem beliebigen Sammelbehälter zugeführt werden. Insbesondere kann er jedoch auch, wie hier durch den gestrichelten Pfeil 22 dargestellt, wieder in das Kurbelgehäuse 15 gefördert werden, sodass das darin enthaltene Schmieröl dem Schmierölsumpf 16 und damit dem Schmierölkreislauf wieder zugeführt wird.

Nun ist es ersichtlich, dass sowohl das Absaugen des flüssigen Schmieröls aus dem Gehäuse 9 als auch das Erzeugen eines entsprechenden Unterdrucks zum Absaugen des Schmierölnebels durch das Fördermittel 19 realisiert werden kann. Die Fördermittel 19 und 21 mit ihren jeweiligen Leitungselementen 18 und 20 müssen dabei nicht notwendigerweise beide vorhanden sein, sondern es reicht vielmehr aus, wenn beispielsweise das Fördermittel 19 vorhanden ist.

In der Darstellung der einzigen beigefügten Figur ist außerdem zu erkennen, dass ein drittes Leitungselement 23 aus dem unteren Bereich des Gehäuses 9 zur Saugseite des Fördermittels 17, also der Schmierölpumpe führt. Dieser Aufbau ermöglicht es, ohne eines der zusätzlichen Fördermittel 19 beziehungsweise 21 einen entsprechenden Effekt zu realisieren, da über dieses Leitungselement 23 zumindest flüssiges Schmieröl aus dem Gehäuse 9 der Getriebeeinheit 8 abgesaugt werden kann. Damit lassen sich zumindest die Panschverluste vermeiden oder minimieren. Je nach Typ der Schmierölpumpe 17 kann über dieses Leitungselement 23 auch ein Anlegen von Unterdruck an das Gehäuse 9 und das Absaugen von Luft beziehungsweise einem Luft-Schmieröl-Nebel realisiert werden. Typischerweise wird die Schmierölpumpe 17 jedoch so ausgestaltet sein, dass diese lediglich zur Förderung von flüssigen Medien geeignet ist. In diesem Fall kann über die hier dargestellte Ventileinrichtung 24, welche über einen Sensor 25 gesteuert wird, der Zustrom von gasförmigem Medium zur Schmierölpumpe 17 verhindert werden. Der Sensor 25 steuert dabei die Ventileinrichtung 24 in der Art, dass diese den durchströmbaren Querschnitt des Leitungselements 23 nur dann freigibt, wenn im Bereich des Sensors 25 flüssiges Schmieröl vorliegt. Der Sensor 25 kann hierfür insbesondere als Schwimmer oder auch als kapazitiver Füllstandssensor ausgebildet sein. Die Ansteuerung der Ventileinrichtung 24 kann dementsprechend mechanisch oder elektrisch realisiert werden, je nach Typ des Sensors.

Prinzipiell reicht bereits eines der Leitungselemente 18, 20, 23 mit dem entsprechenden Fördermittel 19, 21, 17 aus, um zumindest über einen der beiden oben beschriebenen Wege eine Verbesserung der Leistungsübertragung in der Getriebeeinheit 8 des Turbo-Compound-Systems 5 zu realisieren. Prinzipiell könnten jedoch auch alle Leitungselemente mit ihren entsprechenden Einrichtungen vorhanden sein. Um die Zahl der Fördermittel und der Leitungselemente zu reduzieren bietet es sich an, in der Praxis entweder eine Realisierung über das Leitungselement 18 und das Fördermittel 19 aufzubauen, wobei das Fördermittel 19 dann sowohl das flüssige Schmieröl als auch das schmierölhaltige Gemisch aus Luft und Schmieröl fördern muss.

Alternativ dazu ist es besonders vorteilhaft, wenn auf eben dieses Leitungselemente 18 oder zumindest auf das in diesem Leitungselement 18 angeordnete Fördermittel 19 gänzlich verzichtet wird. Sind dafür die beiden anderen Leitungselemente 23 und 20 sowie das Fördermittel 21 vorhanden, so kann mit minimalem Aufwand über das Leitungselement 23 das Absaugen des flüssigen Schmieröls über die ohnehin vorhandene Schmierölpumpe 17 realisiert werden. Ergänzend dazu wird über das Leitungselement 20 und das Fördermittel 21 ein entsprechender Unterdruck an das Gehäuse 9 der Getriebeeinheit 8 angelegt, um den Nebel aus Luft und Schmieröltröpfchen abzusaugen und durch das Anlegen eines Unterdrucks und die damit verbundene leichte Evakuierung des Gehäuses 9 eine weitere Steigerung des Wirkungsgrads zu erreichen.

Zum Antrieb des oder der Fördermittel in der Antriebsvorrichtung 1 sind dabei alle üblichen und bekannten Aufbauten und Methoden denkbar. Entweder können die Fördermittel 17, 19, 21 über mechanische Getriebeeinheiten, Riementriebe, Kettentriebe oder dergleichen über sich drehende Wellen in der Antriebsvorrichtung 1 mit angetrieben werden, wie dies beispielsweise bei Schmierölpumpen 17 allgemein bekannt und üblich ist. Alternativ oder ergänzend hierzu können auch alle oder einige der Fördermittel 17, 19,21 über andere Arten angetrieben werden, beispielsweise durch hydraulische oder elektrische Motoren.

Das Türbo-Compound-System 5 dient dabei über seine Abtriebswelle 7 zumindest mittelbar dazu, die aus dem Abgasstrang 3 entnommene Leistung der Antriebsvorrichtung 1 abtriebsseitig der Verbrennungskraftmaschine 2 zuzuleiten, um so Antriebsleistung einsparen zu können. Alternativ oder ergänzend hierzu wäre es auch denkbar, dass über das Turbo-Compound-System 5 ein anderes Bauelement angetrieben wird, beispielsweise ein Hilfsaggregat der Antriebsvorrichtung 1 oder des damit ausgestatteten Systems beziehungsweise Fahrzeugs. Derartige Hilfsaggregate könnten beispielsweise Luftpresser, Klimakompressoren, hydraulische Motoren oder dergleichen sein, welche einen entsprechenden Leistungsbedarf aufweisen. Auch der Antrieb derartiger Hilfsaggregate kann insbesondere über die Abtriebswelle 7 des Turbo-Compound-Systems 5 realisiert werden. Prinzipiell sind jedoch auch andere Varianten denkbar, nämlich das Anbinden eines derartigen Hilfsaggregates an ein anderes sich drehendes Bauteil in der Getriebeeinheit 8 des Turbo-Compound-Systems 5. Bei dem Hilfsaggregat kann es sich dabei insbesondere um einen Luftverdichter, beispielsweise in Strömungsbauart, handeln, welcher alternativ oder ergänzend zu einem Strömungsverdichter eines Turboladers die der Verbrennungskraftmaschine 2 zugeführte Luft entsprechend verdichtet. Wird dieser über die Abtriebswelle 7 oder auch ein anderes rotierendes Bauteil des Turbo-Compound-Systems 5 entsprechend angetrieben, so kann er zusätzlich zur Leistungssteigerung der Verbrennungskraftmaschine 2 genutzt werden. Ist ein solcher Strömungsverdichter als Hilfsaggregat parallel zu einer Anbindung des Turbo-Compound-Systems 5 an die Welle 11 der Antriebsvorrichtung 1 realisiert, so kann gegebenenfalls auch bei nicht ausreichender Energie im Abgasstrang 3 über das Turbo-Compound-System 5 ein Antrieb eines solchen Hilfsaggregates durch Leistung an der Welle 11 realisiert werden.

## Patentansprüche

1. Turbo-compound-System mit einer eine Verbrennungskraftmaschine aufweisenden Antriebsvorrichtung (1) mit
einer von einer Turbine (4) angetriebenen Well (6),
einer Abtriebswelle (7); und
einer die Wellen erbindenden Getriebeeinheit (8), welche
in einem Gehäuse (9) angeordnet ist, und
zumindest eine hydrodynamische Kupplung (10) aufweist;
**dadurch gekennzeichnet, dass**
die Antriebsvorrichtung (1) wenigstens ein Fördermittel (17, 19, 21) aufweist, durch welches Schmieröl oder ein schmierölhaltiges Gemisch aus dem Gehäuse (9) absaugbar ist.

2. Turbo-Compound-System nach Anspruch 1, **dadurch gekennzeichnet, dass** das wenigstens eine Fördermittel (17, 19, 21) direkt oder über ein Leitungselement (18, 20, 23) mit dem Gehäuse (9) der Getriebeeinheit (8) verbunden ist.

3. Turbo-Compound-System nach Anspruch 2, **dadurch gekennzeichnet, dass** die Verbindung bei bestimmungsgemäßem Gebrauch in Richtung der Schwerkraft oberhalb eines typischerweise den Ölsumpf der Getriebeeinheit (8) aufweisenden Bereichs des Gehäuses (9) mündet.

4. Turbo-Compound-System nach Anspruch 2 oder 3, **dadurch gekennzeichnet, dass** die Verbindung bei bestimmungsgemäßem Gebrauch in Richtung der Schwerkraft im unteren Bereich oder von unten in das Gehäuse (9) mündet.

5. Turbo-Compound-System nach einem der Ansprüche 1 bis 4, **dadurch gekennzeichnet, dass** die Verbrennungskraftmaschine (2) ein Kurbelgehäuse (15) aufweist, wobei im Bereich des Kurbelgehäuses (15) wenigstens ein Fördermittel (17) angeordnet ist, über welches Schmieröl aus dem Bereich des Kurbelgehäuses (15) absaugbar ist.

6. Turbo-Compound-System nach Anspruch 5, **dadurch gekennzeichnet, dass** die Antriebsvorrichtung (1) wenigstens zwei Fördermittel (17, 19, 21) aufweist, wobei eines im Bereich des Kurbelgehäuses (15) angeordnet ist und ein anderes direkt oder über ein Leitungselemente (18, 20) mit dem Gehäuse (9) der Getriebeeinheit (8) verbunden ist.

7. Turbo-Compound-System nach Anspruch 5, **dadurch gekennzeichnet, dass** das Fördermittel (17) im Bereich des Kurbelgehäuses (15) als das einzige Fördermittel (17) ausgebildet ist, wobei das Gehäuse (9) der Getriebeeinheit (8) über ein Leitungselement (23) mit dem Fördermittel (17) im Bereich des Kurbelgehäuses (15) verbunden ist.

8. Turbo-Compound-System nach Anspruch 7, **dadurch gekennzeichnet, dass** das Leitungselement (23) eine über einen Sensor (25) gesteuerte Ventileinrichtung (24) aufweist, welche einen durchströmbaren Querschnitt des Leitungselements (23) nur bei Vorhandensein von flüssigem Medium freigibt.

9. Turbo-Compound-System nach einem der Ansprüche 1 bis 8, **dadurch gekennzeichnet, dass** das wenigstens eine Fördermittel (19, 21) druckseitig mit einem Sammelbehälter, insbesondere dem Kurbelgehäuse (15) verbunden ist.

10. Turbo-Compound-System nach einem der Ansprüche 1 bis 9, **dadurch gekennzeichnet, dass** das schmierölhaltige Gemisch wenigstens eine gasförmige Komponente aufweist.

11. Turbo-Compound-System nach einem der Ansprüche 1 bis 10, **dadurch gekennzeichnet, dass** die Abtriebswelle (7) zumindest mittelbar mit einer Welle (11), insbesondere Kurbelwelle, der Antriebsvorrichtung (1) verbunden ist.

12. Turbo-Compound-System nach einem der Ansprüche 1 bis 11, **dadurch gekennzeichnet, dass** die Abtriebswelle (7) oder ein anderes drehendes Bauteil der Getriebeeinheit (8) zumindest mittelbar mit einer Antriebswelle wenigstens eines Hilfsaggregates verbunden ist.

## Claims

1. A turbocompound system with a drive apparatus comprising an internal combustion engine (1), comprising
a shaft (6) driven by a turbine (4);
an output shaft (7), and
a transmission (8) unit which connects the shafts (6, 7) and which is arranged in a housing (9) and
comprises at least one hydrodynamic coupling (10);
**characterized in that**
the drive apparatus (1) comprises at least one conveying means (17, 19, 21), by means of which lubricating oil or a mixture containing lubricating oil can be extracted by suction from the housing (9).

2. A turbocompound system according to claim 1, **characterized in that** the at least one conveying means (17, 19, 21) is connected directly or via a conduit element (18, 20, 23) with the housing (9) of the transmission unit (8).

3. A turbocompound system according to claim 2, **characterized in that** the connection, when used as intended, opens in the direction of gravity above a region of the housing (9) typically comprising the oil sump of the transmission unit (8).

4. A turbocompound system according to claim 2 or 3, **characterized in that** the connection, when used as intended, opens in the direction of gravity into a bottom region or from below into the housing (9).

5. A turbocompound system according to one of the claims 1 to 4, **characterized in that** the internal combustion engine (2) comprises a crankcase (15), with at least one conveying means (17) being arranged in the region of the crankcase (15), by means of which lubricating oil can be extracted by suction from the region of the crankcase (15).

6. A turbocompound system according to claim 5, **characterized in that** the drive apparatus (1) comprises at least two conveying means (17, 19, 21), with one being arranged in the region of the crankcase (15) and another being connected with the housing (9) of the transmission unit (8) either directly or via a conduit element (18, 20).

7. A turbocompound system according to claim 5, **characterized in that** the conveying means (17) is arranged in the region of the crankcase (15) as the sole conveying means (17), with the housing (9) of the transmission unit (8) being connected via a conduit element (23) with the conveying means (17) in the region of the crankcase (15).

8. A turbocompound system according to claim 7, **characterized in that** the conduit element (23) comprises a valve device (24) which is controlled by a sensor (25) and which releases a flowable cross-section of the conduit element (23) only in the presence of fluid medium.

9. A turbocompound system according to one of the claims 1 to 8, **characterized in that** the at least one conveying means (19, 21) is connected on the pressure side with a collecting container, especially the crankcase (15).

10. A turbocompound system according to one of the claims 1 to 9, **characterized in that** the mixture containing lubricating oil has at least one gaseous component.

11. A turbocompound system according to one of the claims 1 to 10, **characterized in that** the output shaft (7) is connected at least indirectly with a shaft (11), especially the crankshaft, of the drive apparatus (1).

12. A turbocompound system according to one of the claims 1 to 11, **characterized in that** the output shaft (7) or any other rotating component of the transmission unit (8) is connected at least indirectly with a drive shaft of at least one auxiliary unit.

## Revendications

1. Système turborécupérateur comportant un dispositif d'entraînement (1) présentant un moteur à combustion interne, comprenant
un arbre (6) entraîné par une turbine (4),
un arbre de sortie (7) et
une unité de transmission (8) reliant les arbres (6, 7), qui est disposée dans un carter (9) et
présente au moins un embrayage hydrodynamique (10);
**caractérisé en ce que**
le dispositif d'entraînement (1) présente au moins un moyen de refoulement (17, 19, 21), à travers lequel on peut aspirer hors du carter (9) de l'huile de lubrification ou un mélange contenant de l'huile de lubrification .

2. Système turborécupérateur selon la revendication 1, **caractérisé en ce qu'**au moins l'un des moyens de refoulement (17,19, 21) est relié directement ou par le biais d'un élément de conduite (18, 20, 23) au carter (9) de l'unité de transmission (8).

3. Système turborécupérateur selon la revendication 2, **caractérisé en ce que** dans des conditions normales d'utilisation le branchement débouche au-dessus d'une zone du carter (9) présentant le puisard d'huile de l'unité de transmission (8) dans le sens de la force de gravité.

4. Système turborécupérateur selon la revendication 2 ou 3, **caractérisé en ce que** dans des conditions normales d'utilisation le branchement émerge dans la zone inférieure ou du dessous dans le carter (9) dans le sens de la force de gravité.

5. Système turborécupérateur selon l'une des revendications 1 à 4, **caractérisé en ce que** le moteur à combustion interne (2) présente un carter de vilebrequin (15), alors qu'au moins un moyen de refoulement (17) est disposé dans la zone du carter de vilebrequin (15), par l'intermédiaire duquel on peut aspirer de l'huile de lubrification hors de la zone du carter de vilebrequin (15).

6. Système turborécupérateur selon la revendication 5,**caractérisé en ce que** le dispositif d'entraînement (1) présente au moins deux moyens de refoulement (17, 19, 21), alors que l'un des deux est disposé dans la zone du carter de vilebrequin (15) et qu'un autre est relié directement ou par le biais d'un élément de conduite (18, 20) au carter (9) de l'unité de transmission (8).

7. Système turborécupérateur selon la revendication 5, **caractérisé en ce que** le moyen de refoulement (17) est constitué comme le seul moyen de refoulement (17) dans la zone du carter de vilebrequin (15), tandis que le carter (9) de l'unité de transmission (8) est relié au moyen de refoulement (17) dans la zone du carter de vilebrequin (15) par le biais d'un élément de conduite (23).

8. Système turborécupérateur selon la revendication 7, **caractérisé en ce que** l'élément de conduite (23) présente un dispositif de soupape (24) commandé par un capteur (25), qui uniquement en présence de fluide liquide libère une section transversale de l'élément de conduite (23), élément à travers lequel peut passer un liquide.

9. Système turborécupérateur selon l'une des revendications 1 à 8, **caractérisé en ce qu'**au moins l'un des moyens de refoulement (19, 21) est relié côté pression à un conteneur d'accumulation, en particulier au carter de vilebrequin (15).

10. Système turborécupérateur selon l'une des revendications 1 à 9,**caractérisé en ce que** le mélange contenant de l'huile de lubrification présente au moins une composante gazeuse.

11. Système turborécupérateur selon l'une des revendications 1 à 10, **caractérisé en ce que** l'arbre de sortie (7) est relié au dispositif d'entraînement (1) au moins indirectement par l'intermédiaire d'un arbre (11), en particulier un vilebrequin.

12. Système turborécupérateur selon l'une des revendications 1 à 11, **caractérisé en ce que** l'arbre de sortie (7) ou un autre composant rotatif de l'unité de transmission (8) est relié au moins indirectement à un arbre d'entraînement d'au moins un groupe auxiliaire.
